# EUROPEAN PATENT SPECIFICATION

(11) **EP 3 999 561 B1**
(45) Date of publication and mention of the grant of the patent: **10.09.2025**
(21) Application number: 20737486.9
(22) Date of filing: 15.07.2020
(51) Int. Cl.: C08F 110/02, C08F 210/16, C08L 23/06, C08F 2/00, C08L 23/08, C08F 4/6592

(54) **PROCESS FOR PRODUCING A POLYMER COMPOSITION**
VERFAHREN ZUR HERSTELLUNG EINER POLYMERZUSAMMENSETZUNG
PROCÉDÉ DE PRODUCTION D'UNE COMPOSITION POLYMÈRE

(30) Priority: 17.07.2019 EP 19186851
(43) Date of publication of application: 25.05.2022
(73) Proprietor: Borealis GmbH, 1020 Vienna (AT)
(72) Inventor: GALGALI, Girish Suresh, 4020 Linz (AT); BERGER, Friedrich, 4021 Linz (AT); AHO, Jani, 06101 Porvoo (FI)
(74) Representative: Dehns
(86) International application number: PCT/EP2020/069929
(87) International publication number: WO 2021/009192

(56) References cited:
- EP-A1- 2 186 833
- WO-A1-2017/009386

## Description

The present invention relates to a process for producing a polymer composition, especially for pipes, caps, closures, rotomolded articles, artificial grass mats, geomembranes, blow molded articles and/or mono or multilayer films.

Various processes for producing polymer compositions are known in the art. These comprise multi-stage processes that allow to fine tune the properties of the materials and for example to improve mechanical properties and/or processability or the balance thereof.

In addition, the use of metallocene catalysts to improve optical properties, like for example transparency and/or mechanical properties are also known in the art.

WO2017009386 discloses a process for preparing a polyethylene product having a multimodal molecular weight distribution. EP2186833 discloses a process for producing polyethylene compositions comprising polymerising polyethylene resins in a cascaded multi-stage reaction.

However, in particular good optical appearance remains a significant challenge. This challenge becomes even more apparent and pressing with materials already having particularly good optical properties, especially a high transparency because in such cases, even slight defects such as for example gels can have a significant negative impact on optical appearance.

It is thus the object of the present invention to improve the optical appearance of articles produced with a polymer composition, especially a polymer composition having a high transparency and/or obtained with a metallocene catalyst.

Therefore, the present invention provides a process for producing a polymer composition wherein:
a first ethylene polymer component (A) is obtained in a first polymerization zone by polymerization conducted in slurry in the presence of ethylene and optionally hydrogen and a second ethylene polymer component (B) is obtained in a second polymerization zone by polymerization conducted in slurry in the presence of ethylene, the first ethylene polymer component (A) and optionally hydrogen and a third ethylene polymer component (C ) is obtained in a third polymerization zone by polymerization conducted in gas phase in the presence of ethylene, optionally hydrogen and at least one comonomer selected from alpha-olefins having from 4 to 10 carbon atoms, to produce a multimodal polymer of ethylene (a) with at least one comonomer selected from alpha-olefins having from 4 to 10 carbon atoms,
- which has
   a) a density between 920 and 960 kg/m³,
   b) MFR₂ of 0.1 to 25 g/10 min (according to ISO 1133 at 190°C under 2.16 kg load),
   c) MWD of 2.0 to 6.0,
- which comprises at least
   - between 10 to < 25 wt% of an ethylene polymer component (A),
   - more than of an ethylene polymer component (A) of an ethylene polymer component (B) and
   - between > 45 and 65 wt% of an ethylene polymer component (C)
   and wherein the ethylene polymer components (A) and (B) are each homopolymers of ethylene and have a density between 940 and 970 kg/m³ and the density of ethylene polymer component (C) has a density between 915 and 950 kg/m³, wherein further the ethylene polymer components (A), (B) and (C) have different MFR₂ values.

The process according to the present invention thereby allows to combine good optical properties, especially a high transparency, and/or good mechanical properties and/or a good processability with a good optical appearance, especially a low level of defects, particularly low levels of gels, particularly low levels of gels with a size > 1000 microns and/or with a size of 600-1000 micron and/or with a size of 300-599 micron and/or with a size of 100-299 micron. Gels or defects may thereby especially for example be due to cross-linked and/or high molecular weight polymer components. High-transparency in the sense of the invention may be obtained for example for metallocene LLDPEs and/or mean for example a light transmission in the visible spectrum of > 75 %, preferably > 80%.

Different MFR₂ values in the sense of the present invention may thereby be for example values that differ by 0.5, 0.1, 0.01 or even 0.001. That the ethylene polymer components (A), (B) and (C) have different MFR₂ values may thereby mean that the multimodal ethylene polymer (a) may be for example bimodal or trimodal from a molecular weight point of view.

The molecular weight distribution (MWD) is thereby equivalent to Mw/Mn as measured by GPC in a suitable way.

The weight percent (wt%) of ethylene polymer components (A), (B) and (C) are given based on the weight of the polymer, namely the multimodal ethylene polymer (a), of the composition and thereby add up to > 93 wt%, preferably > 95 wt% or 100 wt% of the polymer, namely the multimodal ethylene polymer (a), in the polymer composition according to the invention. For avoidance of doubt, this means that values in weight percent (wt%) for ethylene polymer components (A), (B) and (C) may have to be selected, preferably in their respective ranges, so that they add up to > 93 wt%, preferably > 95 wt% or 100 wt% of the polymer, namely the multimodal ethylene polymer (a), in the polymer composition according to the invention.

In a process for producing a polymer composition according to the invention, the second ethylene polymer component (B) may preferably be obtained in the presence of the first ethylene polymer component (A) and/or the third ethylene polymer component (C) may be obtained in the presence of the first ethylene polymer component (A) and/or the second ethylene polymer component (B). Nonetheless (and in contrast to the second ethylene polymer component (B)), third ethylene polymer component (C) as used herein may preferably refer (only) to the component produced in the third polymerization zone, as such.

In a process for producing a polymer composition according to the invention, the third ethylene polymer component (C) may be a copolymer of ethylene and of a comonomer selected from 1-butene, 1hexene and/or 1-octene, preferably 1-hexene. This may contribute to improve and/or optimize material properties, especially optical properties such as transparency, and/or mechanical properties.

In a process for producing a polymer composition according to the invention, the first and/or second polymerization zone may comprise at least one slurry loop reactor and the third polymerisation zone comprises at least one gas phase reactor, preferably connected in series. This may contribute to improve and/or optimize material properties, especially optical properties such as transparency, and/or mechanical properties.

In a process for producing a polymer composition according to the invention, the first ethylene polymer component (A) may be produced in a slurry loop reactor and the second ethylene polymer component (B) may produced in a slurry loop reactors, preferably where both slurry loop reactors are connected in series. This may contribute to improve the homogeneity of the composition.

In a process for producing a polymer composition according to the invention, the first and second polymerization zones each may comprise one slurry loop reactor connected in series, whereby hydrogen is fed only to the first of these slurry loop reactors and both of these slurry loops reactors are otherwise run under the same/similar conditions or different conditions, preferably under the same/similar conditions, whereby preferably both of these slurry loops reactors are run at a temperature of between 70 and 95 °C and/or a pressure of 5000-6000 kPa and/or preferably both of these slurry loops reactors are run at the same temperature ± 10 % or ± 5 °C and/or at the same pressure ± 10 % or ± 50 kPa. Similar conditions in the sense of the present inventions may thereby be conditions that deviate for example only by ± 25 %, ± 20 % or ± 10 %. The same conditions in the sense of the present invention are identical conditions. Different conditions in the sense of the invention may mean different by > ±20 %, preferably > ±25 %. This may further contribute to improve the homogeneity of the composition.

In a process for producing a polymer composition according to the invention, the ethylene polymer component (A) may have a MFR₂ lower than the MFR₂ of ethylene polymer component (B), preferably of 5 to 50, preferably of 5 to 45, preferably of 7 to 40, more preferably of 10 to 37 g/10 min, further preferred 15 to 35 g/10min and/or wherein ethylene polymer component (B) has an MFR₂ 5 to 50 g/10 min, preferably of 5 to 45, preferably of 7 to 40, more preferably of 10 to 35 g/10 min, further preferred 15 to 30 g/10min and/or wherein the MFR₅ of the ethylene polymer component (C) is 0.01 to 5, preferably 0.05 to 3, preferably 0.1 to 1 g/10 min all measured according to ISO 1133 at 190°C under 2.16 kg or 5 kg load. This may further contribute to improve and/or optimize material properties, especially optical properties such as transparency, and/or mechanical properties. In addition, this may also contribute to improve the homogeneity of the composition.

In a process for producing a polymer composition according to the invention, the alpha-olefin comonomer having from 4 to 10 carbon atoms of ethylene polymer component (C) may be 1-hexene and/or the multimodal polymer of ethylene (a) may comprise between 13 and 23 wt% of the ethylene polymer component (A) and/or between 25 and < 50, preferably 25 and 40, preferably 25 and 30 wt% of the ethylene polymer component (B) and/or between > 45 and 62, preferably > 45 and 58, preferably 48 and 55 wt% of the ethylene polymer component (C)This may further contribute to improve and/or optimize material properties, especially optical properties such as transparency, and/or mechanical properties.

In a process for producing a polymer composition according to the invention, the ethylene polymer component (B) may have a density equal or higher than the density of the ethylene polymer component (A). This may contribute to improve the homogeneity of the composition and/or to further improve the optical appearance.

In a process for producing a polymer composition according to the invention, the density of the ethylene component (C) is equal or lower than the density of the ethylene polymer component (A) and/or of ethylene polymer component (B). This may contribute to improve the homogeneity of the composition and/or to further improve the optical appearance.

In a process for producing a polymer composition according to the invention, the density of the ethylene polymer components (A) and (B) may be of 945 to 965, preferably of 950 to < 965 kg/m³ and/or the density of polymer component (C) is of 920 to 942, preferably 925 to 940, preferably 930 to 940 kg/m³. This may further contribute to improve and/or optimize material properties, especially optical properties such as transparency, and/or mechanical properties. In addition, this may also contribute to improve the homogeneity of the composition.

In a process for producing a polymer composition according to the invention, the the density of the multimodal polymer of ethylene (a) may be of 930 to 955, preferably of 935 to 952, kg/m³ and/or the multimodal polymer of ethylene (a) may have an MFR₂ of 0.1 to 10, preferably 0.5 to 8, preferably 0.6 to 3 g/10min and/or wherein the multimodal polymer of ethylene (a) may have MFR₂₁/ MFR₂ of 10 to 40, preferably 15 to 35, preferably 20 to 35, preferably 25 to < 35 and/or the multimodal polymer of ethylene (a) may have an MFR₅ of 1 to 5, preferably > 1 to < 3.5 g/10min. This may further contribute to improve and/or optimize material properties, especially optical properties such as transparency, and/or mechanical properties

In a process for producing a polymer composition according to the invention, the multimodal polymer of ethylene (a) is produced using a single site catalyst, preferably a substituted and/or bridged bis-cyclopentadienyl zirconium or hafnium catalyst, preferably wherein the ethylene polymer components (A), (B) and (C) of the polymer of ethylene (a) are produced using same single site catalyst, preferably a substituted and/or bridged bis-cyclopentadienyl zirconium or hafnium catalyst and/or have each an MWD of between 2.0 and 5.0, preferably 2.5 and 4.5, preferably > 2.5 and < 4. This may further contribute to improve and/or optimize material properties, especially optical properties such as transparency, and/or mechanical properties. In addition, this may also contribute to improve the homogeneity of the composition and/or the optical appearance.

The present invention also concerns a pipe, cap, closure, rotomolded article, artificial grass mat, geomembrane, blow molded article and/or mono or multilayer film comprising a polymer composition produced using a process according to the invention. Such articles may show good optical properties, especially a high transparency, and/or good mechanical properties and/or a good processability in combination with a good optical appearance, especially a low level of defects, particularly low levels of gels, particularly low levels of gels with a size > 1000 microns and/or with a size of 600-1000 micron and/or with a size of 300-599 micron and/or with a size of 100-299 micron. This may contribute to improve optical appearance.

To produce polymer compositions, such as in the present invention, two or more reactors or zones connected in series as described in EP 517 868 can be used.

According to the present invention, the main polymerisation stages are preferably carried out as a combination of slurry polymerisation/gas-phase polymerisation. The slurry polymerisation is preferably performed in a so-called slurry loop reactor.

Optionally, the main polymerisation stages may be preceded by a pre-polymerisation, in which case a prepolymer (P) may be produced in the amount of for example 0.1 to < 7 wt%, preferably 0.1 to < 5w%, preferably 1 to 4 wt% by weight of the total amount of polymers is produced. The pre-polymer may be an ethylene homo- or copolymer, preferably an ethylene copolymer, further preferred with 1-butene or 1-hexene.

In the case there is a pre-polymerisation the weight percent (wt%) of ethylene polymer components (A), (B) and (C) are given based on the weight of the polymer, namely the multimodal ethylene polymer (a), of the polymer composition and thereby add up to > 93 wt%, preferably > 95 wt%, of polymer, namely the multimodal ethylene polymer (a), in the polymer composition according to the invention, so that the weight percent (wt%) of ethylene polymer components (A), (B), (C) and prepolymer (P) have to be selected in their respective ranges to add up to 100 wt% based on the weight of polymer, namely the multimodal ethylene polymer (a), in the polymer composition. This may further contribute to improve and/or optimize material properties, especially optical properties such as transparency, and/or mechanical properties. In addition, this may also contribute to improve the homogeneity of the composition and/or the optical appearance.

The prepolymerization may thereby be carried out in the smallest of the reactors used, whereby preferably prepolymerization is carried out at temperature lower than the temperature in the first and/or second polymerization zone, preferably at a temperature lower than both slurry loop reactors, preferably in the range of 30 to < 70 °C and/or prepolymerization is carried out at a pressure of 5000-6000 kPa and/or in that the concentration of hydrogen (in mol/kmol) in the prepolymerization zone is the same as the concentration of hydrogen (in mol/kmol) in the first polymerization zone ± 30 %, preferably ± 20 %, preferably ± 10 % . This may further contribute to improve and/or optimize material properties, especially optical properties such as transparency, and/or mechanical properties. In addition, this may also contribute to improve the homogeneity of the composition and/or the optical appearance.

If a pre-polymerisation takes place, in this case all of the catalyst is preferably charged into the first prepolymerisation reactor and the pre-polymerisation is performed as slurry polymerisation. Such a polymerisation leads to less fine particles being produced in the following reactors and to a more homogeneous product being obtained in the end.

The resulting multimodal polymer of ethylene (a) consists of an intimate mixture of the polymers from the three main reactors, the different molecular-weight-distribution curves of these polymers together forming a molecular-weight-distribution curve having a broad maximum or three maxima, i.e. the end product is a trimodal polymer mixture.

The polymer composition according to the invention may also comprise additives like process aids, antioxidants, pigments, UV-stabilizers and the like. Usually, the amount at those additives may be 0 to 10 wt% or > 0 to 10 wt%, based on the weight of the total composition. This means that the amount of polymer, namely the multimodal ethylene polymer (a), in the polymer composition may 90 wt% to 100 wt% or 90 wt% to < 100 wt%.

### Examples

Two samples IE1 and CE of were produced using prepolymerisation followed by polymerisation in a first slurry reactor (loop reactor 1) by feeding ethylene (C2), one metallocene catalyst as described below, hydrogen and propane as a diluent. Whereby the first slurry loop reactor is connected in series with another slurry reactor (loop reactor 2), so that the first ethylene polymer component (A) produced in the loop reactor 1 is fed to the loop reactor 2. Ethylene (C2) is thereby polymerized in the presence of the polymer produced in the loop reactor 1 and hydrogen to produce a second ethylene component (B). The loop reactor 2 is thereby connected in series to a gas phase reactor (GPR), so that the second ethylene component (B) is fed to the GPR and ethylene is polymerized in the GPR with 1-hexene (C6) as comonomer as well as hydrogen to obtain a third ethylene polymer component (C), so as to produces multimodal polymers of ethylene (a).

The process comprises of a flash between loop2 reactor and GPR reactor, in order to remove the diluent and unreacted monomer(s).

The polymerisation conditions are given in Table 1 below.

The MWD of each sample was determined to be in the range from 2-6 by GPC. Similarly, the MWD of each ethylene polymer component was determined to be in the range of 2 to 4 by GPC.

### Catalyst preparation:

130 grams of a metallocene complex bis(1-methyl-3-n-butylcyclopentadienyl) zirconium (IV) dichloride (CAS no. 151840-68-5) and 9.67 kg of a 30% solution of commercial methylalumoxane (MAO) in toluene were combined and 3.18 kg dry purified toluene was added. Thus, obtained complex solution was added onto 17kg silica carrier Sylopol 55 SJ (supplied by Grace) by very slow uniform spraying over 2 hours. The temperature was kept below 30°C. The mixture was allowed to react for 3 hours after complex addition at 30°C.

### Molecular weights, molecular weight distribution, Mn, Mw, MWD:

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrenedivinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 x10⁻³ dL/g and a: 0.655 for PS, and K: 39 x10⁻³ dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

### Gel content:

Gel content was analyzed by an Optical Control System (OCS Film-Test FSA100) with a CCD (Charged-Coupled Device) camera provided by Optical Control Systems GmbH, which measures gels and defects in the film produced from the compositions. The gels and defects are recognized optoelectronically by their different light transmittance compared to the film matrix.

A translucent 70 µm thick cast film was photographed using high resolution line cameras and appropriate background illumination. The number and the area of gels per total film area are then calculated using an image recognition software.

The film defects/gels are measured and classified according to their size (longest dimension).

Cast film preparation, extrusion parameters:
1. Output 25±4g/min
2. Extruder temperature profile 200/210/210/210/210-Die
3. Film thickness about 70 µm
4. Chill Roll temperature 20°C
5. airknife needed

Technical data for the extruder:
1. Screw type: 3 Zone, nitrated
2. Screw diameter:25mm
3. Screw length: 25D
4. Feeding zone: 10D
5. Compression zone: 4D
6. Die 150mm

The defects were classified according to the size (µm)/m2:
100-299
300-599
600-999
>1000

The results are also shown in Table 1 below. One can see that optical appearance is improved as the number of gels decreases for IE1 compared to CE.

**Table 1.**

| Case | IE1 | CE |
|---|---|---|
| Process | | |
| **Prepolymerisation** | | |
| Catalyst feed (g/h) | 50 | 49 |
| Temp. (°C) | 50 | 50 |
| Pressure (kPa) | 5857 | 5856 |
| C2 feed (kg/h) | 4 | 4 |
| H2 feed (g/h) | 0.2 | 0.2 |
| C4 feed (g/h) | 101.4 | 101.8 |
| Split (%) | 3 | 3.2 |

| **Ethylene polymer component A (loop reactor 1)** | | |
|---|---|---|
| Temp. (°C) | 85 | 85 |
| Pressure (kPa) | 5673 | 5667 |
| H2/C2 ratio (mol/kmol) | 0.25 | 0.25 |
| C4 feed (kg/h) | 0 | 0 |
| C2 (mol. %) | 5 | 5.7 |
| Split % | 20.9 | 26.8 |
| MFR2 (g/10 min) | 32 | 36 |
| Density (kg/m³) | 958 | 959 |

| **Ethylene polymer component B (loop reactor 2)** | | |
|---|---|---|
| Temp. (°C) | 85 | 85 |
| Pressure(kPa) | 5572 | 5554 |
| H2/C2 ratio (mol/kmol) | 0 | 0 |
| C4 feed (kg/h) | 0 | 0 |
| C2 (mol. %) | 4.8 | 4.1 |
| Split (%) | 26.4 | 19.9 |
| MFR2 (g/10 min) | 22 | 27.5 |
| Density (kg/m³) | 962 | 963 |

| **GPR (C)** | | |
|---|---|---|
| Temp. (°C) | 80 | 80 |
| Pressure(kPa) | 2000 | 2000 |
| H2/C2 ratio (mol/kmol) | 0 | 0 |
| C6/C2 ratio (mol/kmol) | 3.4 | 3.9 |
| Split % | 49.7 | 50.1 |
| MFR5 (g/10min) | 0.09 | 0.1 |
| Density (kg/m³) | 938 | 938 |

| **Final** | | |
|---|---|---|
| Density (kg/m³) | 951 | 950 |
| MFR2 (g/10min) | 0.7 | 0.8 |
| MFR5 (g/10 min) | 2.8 | 3.2 |
| MFR21 (g710min) | 30.5 | 35 |
| Gels/m2 > 1000 µm | 5 | 11 |
| Gels/m2 600-1000 µm | 263 | 873 |
| Gels/m2 300-599 µm | 5746 | 17252 |
| Gels/m2 100-299 µm | 66050 | 145311 |

## Claims

1. A process for producing a polymer composition, **characterized in that** a first ethylene polymer component (A) is obtained in a first polymerization zone by polymerization conducted in slurry in the presence of ethylene and optionally hydrogen and a second ethylene polymer component (B) is obtained in a second polymerization zone by polymerization conducted in slurry in the presence of ethylene, first ethylene polymer component (A) and optionally hydrogen and a third ethylene polymer component (C ) is obtained in a third polymerization zone by polymerization conducted in gas phase in the presence of ethylene, optionally hydrogen and at least one comonomer selected from alpha-olefins having from 4 to 10 carbon atoms, to produce a multimodal polymer of ethylene (a) with at least one comonomer selected from alpha-olefins having from 4 to 10 carbon atoms,
- which has
a) a density between 920 and 960 kg/m³,
b) MFR₂ of 0.1 to 25 g/10 min (according to ISO 1133 at 190°C under 2.16 kg load),
c) MWD of 2.0 to 6.0,
- which comprises at least
- between 10 to < 25 wt% of an ethylene polymer component (A),
- more than of an ethylene polymer component (A) of an ethylene polymer component (B) and
- between > 45 and 65 wt% of an ethylene polymer component (C) and wherein the ethylene polymer components (A) and (B) are each homopolymers of ethylene and have a density between 940 and 970 kg/m³ and the density of ethylene polymer component (C) has a density between 915 and 950 kg/m³, wherein further the ethylene polymer components (A), (B) and (C) have different MFR₂ values.

2. A process for producing a polymer composition according to claim 1, **characterized in that** the third ethylene polymer component (C) is a copolymer of ethylene and of a comonomer selected from 1-butene, 1hexene and/or 1-octene, preferably 1-hexene.

3. A process for producing a polymer composition according to claim 1 or 2, **characterized in that** the first and/or second polymerization zone comprise at least one slurry loop reactor and the third polymerisation zone comprises at least one gas phase reactor, preferably connected in series.

4. A process for producing a polymer according to any of the preceding claims, **characterized in that** the first ethylene polymer component (A) is produced in a slurry loop reactor and the second ethylene polymer component (B) is produced in a slurry loop reactors, preferably where both slurry loop reactors are connected in series.

5. A process for producing a polymer composition according to any of the preceding claims, **characterized in that** the first and second polymerization zones each comprises one slurry loop reactor connected in series, whereby hydrogen is fed only to the first of these slurry loop reactors and both of these slurry loops reactors are otherwise run under the same/similar conditions or different conditions, preferably under same/similar conditions, preferably both of these slurry loops reactors are run at a temperature of between 70 and 95 °C and/or a pressure of 5000-6000 kPa and/or preferably both of these slurry loops reactors are run at the same temperature ±10 % or ± 5 °C and/or at the same pressure ±10 % or ± 50 kPa.

6. A process for producing a polymer composition according to any of the preceding claims , wherein the ethylene polymer component (A) has a MFR₂ equal or higher than the MFR₂ of ethylene polymer component (B), preferably of 5 to 50, preferably of 5 to 45, preferably of 7 to 40, more preferably of 10 to 37 g/10 min, further preferred 15 to 35 g/10min and/or wherein ethylene polymer component (B) has an MFR₂ 5 to 50 g/10 min, preferably of 5 to 45, preferably of 7 to 40, more preferably of 10 to 35 g/10 min, further preferred 15 to 30 g/10min, further preferred 20 to 25 g/10min and/or wherein the MFR₅ of the ethylene polymer component (C) is 0.01 to 5, preferably 0.05 to 3, preferably 0.1 to 1 g/10 min all measured according to ISO 1133 at 190°C under 2.16 kg or 5 kg load.

7. A process for producing a polymer composition according to any of the preceding claims, wherein the alpha-olefin comonomer having from 4 to 10 carbon atoms of ethylene polymer component (C) is 1-hexene and/or wherein the multimodal polymer of ethylene (a) comprises between 13 and 23 wt% of the ethylene polymer component (A) and/or between 25 and < 50, preferably 25 and 40, preferably 25 and 30 wt% of the ethylene polymer component (B) and/or between > 45 and 62, preferably > 45 and 58, preferably 48 and 55 wt% of the ethylene polymer component (C).

8. A process for producing a polymer composition according to any of the preceding claims, wherein the ethylene polymer component (B) has a density equal or higher than the density of the ethylene polymer component (A).

9. A process for producing a polymer composition according to any of the preceding claims, wherein the density of the ethylene component (C) is equal or lower than the density of the ethylene polymer component (A) and/or of ethylene polymer component (B).

10. A process for producing a polymer composition according to any of the preceding claims, wherein the density of the ethylene polymer components (A) and (B) is of 945 to 965, preferably of 950 to < 965 kg/m3 and/or the density of polymer component (C) is of 920 to 942, preferably 925 to 940, preferably 930 to 940 kg/m3.

11. A process for producing a polymer composition according to any of the preceding claims, wherein the density of the multimodal polymer of ethylene (a) is of 930 to 955, preferably of 935 to 952, kg/m3 and/or wherein the multimodal polymer of ethylene (a) has an MFR2 of 0.1 to 10, preferably 0.5 to 8, preferably 0.6 to 3 g/10min and/or wherein the multimodal polymer of ethylene (a) has MFR21/ MFR2 of 10 to 50, preferably 15 to 45, preferably 20 to 45, preferably 25 to < 45 and/or wherein the multimodal polymer of ethylene (a) has an MFR5 of 1 to 5, preferably > 1 to < 3.5 g/10min.

12. A process for producing a polymer composition according to any of the preceding claims, wherein the multimodal polymer of ethylene (a) is produced using a single site catalyst preferably a substituted and/or bridged bis-cyclopentadienyl zirconium or hafnium catalyst, preferably wherein the ethylene polymer components (A), (B) and (C) of the polymer of ethylene (a) are produced using same single site catalyst, preferably a substituted and/or bridged bis-cyclopentadienyl zirconium or hafnium catalyst and/or have each an MWD of between 2.0 and 5.0, preferably 2.5 and 4.5, preferably > 2.5 and < 4.

13. A pipe, cap, closure, rotomolded article, artificial grass mat, geomembrane, blow molded article and/or mono or multilayer film comprising the polymer composition produced using a process according to any of the preceding claims 1 to 12.

## Patentansprüche

1. Verfahren zur Herstellung einer Polymerzusammensetzung, **dadurch gekennzeichnet, dass** eine erste Ethylenpolymerkomponente (A) in einer ersten Polymerisationszone durch Polymerisation in Suspension in Gegenwart von Ethylen und optional Wasserstoff erhalten wird, und eine zweite Ethylenpolymerkomponente (B) in einer zweiten Polymerisationszone durch Polymerisation in Suspension in Gegenwart von Ethylen, der ersten Ethylenpolymerkomponente (A) und optional Wasserstoff erhalten wird, und eine dritte Ethylenpolymerkomponente (C) in einer dritten Polymerisationszone durch Polymerisation erhalten wird, die in der Gasphase in Gegenwart von Ethylen, optional Wasserstoff und mindestens einem Comonomer, ausgewählt aus Alpha-Olefinen, die 4 bis 10 Kohlenstoffatome aufweisen, durchgeführt wird, um ein multimodales Polymer von Ethylen (a) mit mindestens einem Comonomer, ausgewählt aus Alpha-Olefinen, die 4 bis 10 Kohlenstoffatome aufweisen, herzustellen,
- die
a) eine Dichte zwischen 920 und 960 kg/m³,
b) MFR₂ von 0,1 bis 25 g/10 min (gemäß ISO 1133 bei 190 °C unter 2,16 kg Belastung),
c) MWD von 2,0 bis 6,0 aufweist,
- die mindestens
- zwischen 10 bis < 25 Gew.-% einer Ethylenpolymerkomponente (A),
- mehr von einer Ethylenpolymerkomponente (B) als von einer Ethylenpolymerkomponente (A) und
- zwischen > 45 und 65 Gew.-% einer Ethylenpolymerkomponente (C) umfasst, und wobei die Ethylenpolymerkomponenten (A) und (B) jeweils Homopolymere von Ethylen sind und eine Dichte zwischen 940 und 970 kg/m³ aufweisen und die Dichte der Ethylenpolymerkomponente (C) eine Dichte zwischen 915 und 950 kg/m³ aufweist, wobei weiter die Ethylenpolymerkomponenten (A), (B) und (C) unterschiedliche MFR₂-Werte aufweisen.

2. Verfahren zur Herstellung einer Polymerzusammensetzung nach Anspruch 1, **dadurch gekennzeichnet, dass** die dritte Ethylenpolymerkomponente (C) ein Copolymer aus Ethylen und einem Comonomer, ausgewählt aus 1-Buten, 1-Hexen und/oder 1-Octen, vorzugsweise 1-Hexen, ist.

3. Verfahren zur Herstellung einer Polymerzusammensetzung nach Anspruch 1 oder 2, **dadurch gekennzeichnet, dass** die erste und/oder die zweite Polymerisationszone mindestens einen Suspensionsschlaufenreaktor umfasst und die dritte Polymerisationszone mindestens einen Gasphasenreaktor umfasst, die vorzugsweise in Reihe geschaltet sind.

4. Verfahren zum Herstellen eines Polymers nach einem der vorstehenden Ansprüche, **dadurch gekennzeichnet, dass** die erste Ethylenpolymerkomponente (A) in einem Suspensionsschlaufenreaktor hergestellt wird und die zweite Ethylenpolymerkomponente (B) in einem Suspensionsschlaufenreaktor hergestellt wird, vorzugsweise wobei beide Suspensionsschlaufenreaktoren in Reihe geschaltet sind.

5. Verfahren zur Herstellung einer Polymerzusammensetzung nach einem der vorstehenden Ansprüche, **dadurch gekennzeichnet, dass** die erste und die zweite Polymerisationszone jeweils einen in Reihe geschalteten Suspensionsschlaufenreaktor umfassen, wobei Wasserstoff nur dem ersten dieser Suspensionsschlaufenreaktoren zugeführt wird und beide dieser Suspensionsschlaufenreaktoren ansonsten unter gleichen/ähnlichen Bedingungen oder unterschiedlichen Bedingungen, vorzugsweise unter gleichen/ähnlichen Bedingungen betrieben werden, vorzugsweise beide dieser Suspensionsschlaufenreaktoren bei einer Temperatur zwischen 70 und 95 °C und/oder einem Druck von 5000-6000 kPa betrieben werden und/oder vorzugsweise beide dieser Suspensionsschlaufenreaktoren bei derselben Temperatur ±10 % oder ± 5 °C und/oder bei demselben Druck ±10 % oder ±50 kPa betrieben werden.

6. Verfahren zur Herstellung einer Polymerzusammensetzung nach einem der vorstehenden Ansprüche, wobei die Ethylenpolymerkomponente (A) einen MFR₂ aufweist, der gleich oder höher ist als der MFR₂ der Ethylenpolymerkomponente (B), vorzugsweise von 5 bis 50, vorzugsweise von 5 bis 45, vorzugsweise von 7 bis 40, bevorzugter von 10 bis 37 g/10 min, weiter bevorzugt von 15 bis 35 g/10 min, und/oder wobei die Ethylenpolymerkomponente (B) einen MFR₂ von 5 bis 50 g/10 min, vorzugsweise 5 bis 45, vorzugsweise 7 bis 40, bevorzugter 10 bis 35 g/10 min, weiter bevorzugt 15 bis 30 g/10 min, weiter bevorzugt 20 bis 25 g/10 min aufweist, und/oder wobei der MFR₅ der Ethylenpolymerkomponente (C) 0,01 bis 5, vorzugsweise 0,05 bis 3, vorzugsweise 0,1 bis 1 g/10 min beträgt, alles gemessen gemäß ISO 1133 bei 190 °C unter 2,16 kg oder 5 kg Belastung.

7. Verfahren zur Herstellung einer Polymerzusammensetzung nach einem der vorstehenden Ansprüche, wobei das Alpha-Olefin-Comonomer der Ethylenpolymerkomponente (C), das 4 bis 10 Kohlenstoffatome aufweist, 1-Hexen ist und/oder wobei das multimodale Polymer von Ethylen (a) zwischen 13 und 23 Gew.-% der Ethylenpolymerkomponente (A) und/oder zwischen 25 und < 50, vorzugsweise 25 und 40, vorzugsweise 25 und 30 Gew.-% der Ethylenpolymerkomponente (B) und/oder zwischen > 45 und 62, vorzugsweise > 45 und 58, vorzugsweise 48 und 55 Gew.-% der Ethylenpolymerkomponente (C) umfasst.

8. Verfahren zur Herstellung einer Polymerzusammensetzung nach einem der vorstehenden Ansprüche, wobei die Ethylenpolymerkomponente (B) eine Dichte aufweist, die gleich oder höher ist als die Dichte der Ethylenpolymerkomponente (A).

9. Verfahren zur Herstellung einer Polymerzusammensetzung nach einem der vorstehenden Ansprüche, wobei die Dichte der Ethylenkomponente (C) gleich oder niedriger ist als die Dichte der Ethylenpolymerkomponente (A) und/oder der Ethylenpolymerkomponente (B).

10. Verfahren zur Herstellung einer Polymerzusammensetzung nach einem der vorstehenden Ansprüche, wobei die Dichte der Ethylenpolymerkomponenten (A) und (B) 945 bis 965, vorzugsweise 950 bis < 965 kg/m3 beträgt und/oder die Dichte der Polymerkomponente (C) 920 bis 942, vorzugsweise 925 bis 940, vorzugsweise 930 bis 940 kg/m3 beträgt.

11. Verfahren zur Herstellung einer Polymerzusammensetzung nach einem der vorstehenden Ansprüche, wobei die Dichte des multimodalen Polymers von Ethylen (a) 930 bis 955, vorzugsweise 935 bis 952 kg/m3 beträgt, und/oder wobei das multimodale Polymer von Ethylen (a) einen MFR2 von 0,1 bis 10, vorzugsweise 0,5 bis 8, vorzugsweise 0,6 bis 3 g/10 min aufweist, und/oder wobei das multimodale Polymer von Ethylen (a) einen MFR21/MFR2 von 10 bis 50, vorzugsweise 15 bis 45, vorzugsweise 20 bis 45, vorzugsweise 25 bis < 45 aufweist, und/oder wobei das multimodale Polymer von Ethylen (a) einen MFR5 von 1 bis 5, vorzugsweise > 1 bis < 3,5 g/10 min aufweist.

12. Verfahren zur Herstellung einer Polymerzusammensetzung nach einem der vorstehenden Ansprüche, wobei das multimodale Polymer von Ethylen (a) unter Verwendung eines Einzelstellenkatalysators, vorzugsweise eines substituierten und/oder verbrückten Bis-Cyclopentadienyl-Zirkonium- oder Hafniumkatalysators, hergestellt wird, vorzugsweise wobei die Ethylenpolymerkomponenten (A), (B) und (C) des Polymers von Ethylen (a) unter Verwendung desselben Einzelstellenkatalysators, vorzugsweise eines substituierten und/oder verbrückten Bis-Cyclopentadienyl-Zirkonium- oder Hafniumkatalysators, hergestellt werden und/oder jeweils eine MWD zwischen 2,0 und 5,0, vorzugsweise zwischen 2,5 und 4,5, vorzugsweise > 2,5 und < 4 aufweisen.

13. Rohr, Kappe, Verschluss, rotationsgeformter Artikel, Kunstrasenmatte, Geomembran, blasgeformter Artikel und/oder ein- oder mehrschichtige Folie, umfassend die Polymerzusammensetzung, die unter Verwendung eines Verfahrens nach einem der vorstehenden Ansprüche 1 bis 12 hergestellt wird.

## Revendications

1. Procédé de production d'une composition polymère, **caractérisé en ce qu'**un premier composant polymère d'éthylène (A) est obtenu dans une première zone de polymérisation par polymérisation menée en suspension en présence d'éthylène et facultativement d'hydrogène et un deuxième composant polymère d'éthylène (B) est obtenu dans une deuxième zone de polymérisation par polymérisation menée en suspension en présence d'éthylène, du premier composant polymère d'éthylène (A) et facultativement d'hydrogène et un troisième composant polymère d'éthylène (C) est obtenu dans une troisième zone de polymérisation par polymérisation menée en phase gazeuse en présence d'éthylène, facultativement d'hydrogène et d'au moins un comonomère sélectionné parmi des alpha-oléfines présentant de 4 à 10 atomes de carbone, pour produire un polymère multimodal d'éthylène (a) avec au moins un comonomère sélectionné parmi des alpha-oléfines présentant de 4 à 10 atomes de carbone,
- qui présente
a) une densité entre 920 et 960 kg/m³,
b) n MFR₂ de 0,1 à 25 g/10 min (selon la norme ISO 1133 à 190 °C sous une charge de 2,16 kg),
c) une MWD de 2,0 à 6,0,
- qui comprend au moins
- entre 10 à < 25 % en poids d'un composant polymère d'éthylène (A),
- davantage d'un composant polymère d'éthylène (B) que d'un composant polymère d'éthylène (A) et
- entre > 45 et 65 % en poids d'un composant polymère d'éthylène (C) et dans lequel les composants polymères d'éthylène (A) et (B) sont chacun des homopolymères d'éthylène et présentent une densité entre 940 et 970 kg/m³ et la densité de composant polymère d'éthylène (C) présente une densité entre 915 et 950 kg/m³, dans lequel, en outre, les composants polymères d'éthylène (A), (B) et (C) présentent des valeurs de MFR₂ différentes.

2. Procédé de production d'une composition polymère selon la revendication 1, **caractérisé en ce que** le troisième composant polymère d'éthylène (C) est un copolymère d'éthylène et d'un comonomère sélectionné parmi le 1-butène, le 1-hexène et/ou le 1-octène, préférablement le 1-hexène.

3. Procédé de production d'une composition polymère selon la revendication 1 ou la revendication 2, **caractérisé en ce que** les première et/ou deuxième zones de polymérisation comprennent au moins un réacteur en boucle de suspension et la troisième zone de polymérisation comprend au moins un réacteur à phase gazeuse, préférablement connectés en série.

4. Procédé de production d'un polymère selon l'une quelconque des revendications précédentes, **caractérisé en ce que** le premier composant polymère d'éthylène (A) est produit dans un réacteur en boucle de suspension et le deuxième composant polymère d'éthylène (B) est produit dans un réacteur en boucle de suspension, préférablement les deux réacteurs en boucle de suspension étant connectés en série.

5. Procédé de production d'une composition polymère selon l'une quelconque des revendications précédentes, **caractérisé en ce que** les première et deuxièmes zones de polymérisation comprennent chacune un réacteur en boucle de suspension connecté en série, de telle sorte que l'hydrogène est acheminé uniquement jusqu'au premier de ces réacteurs en boucle de suspension et ces deux réacteurs en boucle de suspension fonctionnent autrement dans des conditions identiques/similaires ou dans des conditions différentes, préférablement dans des conditions identiques/similaires, préférablement ces deux réacteurs en boucle de suspension fonctionnent à une température entre 70 et 95 °C et/ou une pression de 5000 à 6000 kPa et/ou préférablement ces deux réacteurs en boucle de suspension fonctionnent à la même température ±10 % ou ± 5 °C et/ou à la même pression ±10 % ou ±50 kPa.

6. Procédé de production d'une composition polymère selon l'une quelconque des revendications précédentes, dans lequel le composant polymère d'éthylène (A) présente un MFR₂ supérieur ou égal au MFR₂ du composant polymère d'éthylène (B), préférablement de 5 à 50, préférablement de 5 à 45, préférablement de 7 à 40, plus préférablement de 10 à 37 g/10 min, de 15 à 35 g/10 min étant en outre préféré et/ou dans lequel le composant polymère d'éthylène (B) présente un MFR2 de 5 à 50 g/10 min, préférablement de 5 à 45, préférablement de 7 à 40, plus préférablement de 10 à 35 g/10 min, de 15 à 30 g/10 min étant en outre préféré, de 20 à 25 g/10 min étant en outre préféré et/ou dans lequel le MFR5 du composant polymère d'éthylène (C) est de 0,01 à 5, préférablement de 0,05 à 3, préférablement de 0,1 à 1 g/10 min tous mesurés selon la norme ISO 1133 à 190 °C sous une charge de 2,16 kg ou de 5 kg.

7. Procédé de production d'une composition polymère selon l'une quelconque des revendications précédentes, dans lequel le comonomère d'alpha-oléfines présentant de 4 à 10 atomes de carbone de composant polymère d'éthylène (C) est du 1-hexène et/ou dans lequel le polymère multimodal d'éthylène (a) comprend entre 13 et 23 % en poids du composant polymère d'éthylène (A) et/ou entre 25 et < 50, préférablement 25 et 40, préférablement 25 et 30 % en poids du composant polymère d'éthylène (B) et/ou entre > 45 et 62, préférablement > 45 et 58, préférablement 48 et 55 % en poids du composant polymère d'éthylène (C).

8. Procédé de production d'une composition polymère selon l'une quelconque des revendications précédentes, dans lequel le composant polymère d'éthylène (B) présente une densité supérieure ou égale à la densité du composant polymère d'éthylène (A).

9. Procédé de production d'une composition polymère selon l'une quelconque des revendications
précédentes, dans lequel la densité du composant d'éthylène (C) est inférieure ou égale à la densité du composant polymère d'éthylène (A) et/ou du composant polymère d'éthylène (B).

10. Procédé de production d'une composition polymère selon l'une quelconque des revendications précédentes, dans lequel la densité des composants polymères d'éthylène (A) et (B) est de 945 à 965, préférablement de 950 à < 965 kg/m3 et/ou la densité du composant polymère (C) est de 920 à 942, préférablement de 925 à 940, préférablement de 930 à 940 kg/m3.

11. Procédé de production d'une composition polymère selon l'une quelconque des revendications précédentes, dans lequel la densité du polymère multimodal d'éthylène (a) est de 930 à 955, préférablement de 935 à 952, kg/m3 et/ou dans lequel le polymère multimodal d'éthylène (a) présente un MFR2 de 0,1 à 10, préférablement de 0,5 à 8, préférablement de 0,6 à 3 g/10 min et/ou dans lequel le polymère multimodal d'éthylène (a) présente un MFR21/MFR2 de 10 à 50, préférablement de 15 à 45, préférablement de 20 à 45, préférablement de 25 à < 45 et/ou dans lequel le polymère multimodal d'éthylène (a) présente un MFR5 de 1 à 5, préférablement de > 1 à < 3,5 g/10 min.

12. Procédé de production d'une composition polymère selon l'une quelconque des revendications précédentes, dans lequel le polymère multimodal d'éthylène (a) est produit en utilisant un catalyseur de site unique, préférablement un catalyseur de hafnium ou de zirconium bis-cyclopentadiényl substitué et/ou en pont, préférablement
dans lequel les composants polymères d'éthylène (A), (B) et (C) du polymère d'éthylène (a) sont produits en utilisant un même catalyseur de site unique, préférablement un catalyseur de hafnium ou de zirconium bis-cyclopentadiényl substitué et/ou en pont et/ou présentent chacun une MWD entre 2,0 et 5,0, préférablement 2,5 et 4,5, préférablement > 2,5 et < 4.

13. Tuyau, couvercle, fermeture, article rotomoulé, tapis de gazon artificiel, géomembrane, article moulé par soufflage et/ou film monocouche ou multicouche comprenant la composition polymère produite en utilisant un procédé selon l'une quelconque des revendications 1 à 12.
